# EUROPEAN PATENT APPLICATION

(11) **EP 3 975 098 A1**
(43) Date of publication of application: **30.03.2022**
(21) Application number: 21181997.4
(22) Date of filing: 28.06.2021
(51) Int. Cl.: G06Q 30/06

(54) **PREPACKAGED BASKET GENERATOR AND INTERFACE**

(30) Priority: 24.09.2020 US 202017030577
(71) Applicant: NCR Corporation, Atlanta, GA 30308-1007 (US)
(72) Inventor: LASERSON, Itamar David, 5405602 Givat Schmuel (IL); SHAHARUR, Moshe, 6918503 Tel Aviv (IL); OHAYON, Julie Dvora Katz, 60970 Ashdod (IL); CHUDIN, Rotem, 4465138 Kfar-Saba (IL)
(74) Representative: Secerna LLP

(57) **Abstract**

Item codes for items are mapped to multidimensional space as item vectors based on transaction contexts. Similar items are clustered together based on distances between the items within the multidimensional space to create item clusters. Basket clusters are derived from the item clusters and each basket cluster is scored. Prepackaged baskets are derived from the scored basket clusters, each prepackaged basket comprising at least 1 item selected from each of the item clusters of a given basket cluster. The prepackaged baskets are recommended to services or systems via an interface.

## Description

The COVID19 pandemic has introduced many challenges to retailers. Some of these challenges include reducing in-store infection rates, sustaining rapid growth associated with online orders, and reducing in-store visit times of customers.

Research indicates that COVID19 survives on plastic, metal, and glass surfaces. The more shoppers and employees of stores touch carts, shelves, or packages, the higher the likelihood of virus transmission. Retailers are struggling to maintain store operations at current high-volume levels while minimizing touch, contact, and overall contamination within their stores. Furthermore, any reported virus transmission within a store can cause a substantial impact on sales for the entire store chain.

Social distancing drove more and more customers to shop through online channels. Retailers report that volumes of online shopping were multiplied by factors of 2 to 10. This is causing major challenges around order fulfillment by workers of the stores. Retailers are not accustomed to delivering orders at the current volume levels. As a result, new orders can take days or even weeks to fulfill.

Moreover, many states enforce regulations to restrict the number of visitors at a given store location and time. In normal situations (pre-pandemic), retailers wanted shoppers to stay at the store as long as possible to maximize purchase potential. In fact, the layout of stores are designed to keep the shoppers in the store and force the shoppers to go by high selling products when the shoppers are only coming in for one or two specific items. During the pandemic, the goal of the retailers have switched, retailers wish to reduce the shopping journey times of their shoppers without reducing their overall sales.

In various embodiments, methods and a system for data-driven prepackaged basket generation and relevant interfaces are presented.

According to a first aspect of the present invention there is provided a method, comprising: mapping item codes of a product catalogue to item vectors plotted in multidimensional space based on contexts of the item codes within a transaction history; identifying item clusters of the item codes based on the item vectors plotted in the multidimensional space; deriving basket clusters from the item clusters; calculating basket cluster scores for the basket clusters; obtaining a select number of the basket clusters based on the basket cluster scores; generating prepackaged baskets from the select number of the basket clusters; and providing a list of the prepackaged baskets to a service or a system.

Aptly, the method further comprises obtaining performance values for the prepackaged baskets from transaction data.

Aptly, the method further comprises training a machine-learning algorithm to generate second prepackaged baskets for transactions based on the item codes, item vectors, the item clusters, the basket clusters, and the performance values.

Aptly, identifying further includes filtering the item clusters out from available item clusters based on comparing calculated distances between item vector pairs plotted in the multidimensional space.

Aptly, filtering further includes selecting a given item cluster associated with a given item vector pair over a given available item cluster associated with the given item vector pair based on a given calculated distance being within a threshold distance and based on first transaction data for corresponding item codes of the given item cluster and second transaction data for corresponding item codes of the given available item cluster.

Aptly, deriving further includes randomly generating the basket clusters with each basket cluster comprising a predefined number of the item clusters.

Aptly, calculating further includes incrementing a given basket cluster score by 1 for a given basket cluster when a transaction within the transaction history indicates there is at least one item code that corresponds to each of the corresponding item clusters identified in the given basket cluster.

Aptly, obtaining further includes identifying the select number of basket clusters based on the select number of basket cluster scores being higher than remaining basket cluster scores for remaining basket clusters.

Aptly, generating further includes generating a predefined number of prepackaged baskets from each of the select number of basket clusters.

Aptly, generating further includes for each prepackaged basket select one corresponding item code from each of the corresponding item clusters of that prepackaged basket.

According to a second aspect of the present invention there is provided a method, comprising: clustering item codes for items into item clusters; deriving basket clusters from the item clusters; calculating scores for each basket cluster; maintaining select basket clusters based on the scores; generating a predefined number of prepackaged baskets from each select basket cluster, each prepackaged basket comprising a unique one of the item codes for each corresponding item cluster of that prepackaged basket; and providing a list of the prepackaged baskets to a service of a system.

Aptly, clustering further includes processing a Word2Vec algorithm against the item codes with the item codes representing words and transactions of a transaction history representing sentences providing contexts for the words.

Aptly, processing further includes obtaining item code vectors mapped to multidimensional space for the item codes from the Word2Vec algorithm.

Aptly, obtaining further includes determining the item clusters based on calculated distances between the item code vectors within the multidimensional space.

Aptly, clustering further includes filtering the item clusters to reduce pairs of similar clusters to a single cluster within the item clusters.

Aptly, deriving further includes randomly deriving each basket cluster with each basket cluster comprising a predefined number of the item clusters.

Aptly, providing further includes receiving a cart item code list from an online transaction system during an online transaction, determining the cart item code list corresponds to a particular prepackaged basket, and providing the item codes that correspond to the particular prepackaged basket back to the online transaction system to offer as an alternative to the cart item code listed during the online transaction.

Aptly, providing further includes providing the list to a management application or a picking system.

According to a third aspect of the present invention there is provided a system, comprising: at least one processing device having at least one processor configured to execute instructions from a non-transitory computer-readable storage medium; the instructions when executed by the at least one processor from the non-transitory computer-readable storage medium cause the at least processor to perform operations comprising: clustering item codes to item clusters; randomly deriving basket clusters from the item clusters; scoring the basket clusters; selecting a predefined number of top scores for the basket clusters based on the scoring; generating a preconfigured number of prepackaged baskets for each of the predefined number of basket clusters; and providing a list of the repackaged baskets to a service or a system through an Application Programming Interface (API).

Aptly, the at least one processor performs the operations as a cloud service provided in real time over network connections to online transaction systems associated with online transactions, picking systems associated with the order fulfillments, and management applications associated with store management.

According to an aspect, a method for data-driven prepackaged basket generation and relevant interfaces is presented. For example, item codes of a product catalogue are mapped to item vectors plotted in multidimensional space based on contexts of the item codes within a transaction history. Item clusters of the item codes are identified based on the plotted item vectors. Basket clusters are derived from the item clusters and basket cluster scores are calculated for the basket clusters. A select number of the basket clusters is obtained based on the basket cluster scores. Prepackaged baskets are generated from the select number of the basket clusters and a list of the prepackaged baskets are provided to a service or a system.

Embodiments of the present invention will now be described hereinafter, by way of example only, with reference to the accompanying drawings in which:
FIG. 1A is a diagram of a system for data-driven prepackaged basket generation and relevant interfaces, according to an example embodiment.
FIG. 1B is a diagram representing a process flow of the system of FIG. 1A, according to an example embodiment.
FIG. 2 is a diagram of a method for data-driven prepackaged basket generation and relevant interfaces, according to an example embodiment.
FIG. 3 is a diagram of another method for data-driven prepackaged basket generation and relevant interfaces, according to an example embodiment.

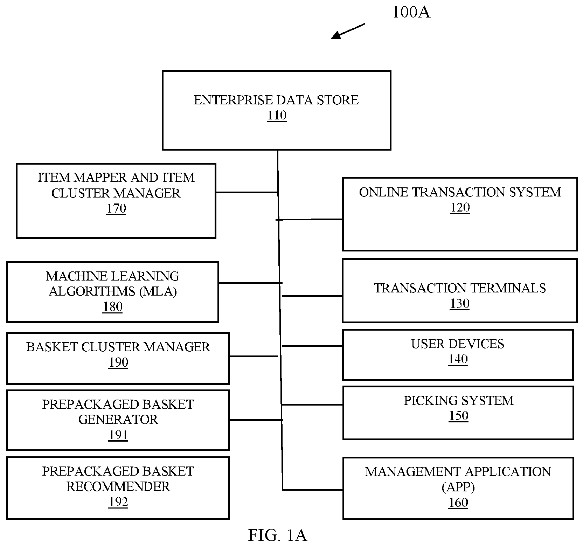

FIG. 1A is a diagram of a system 100 for data-driven prepackaged basket generation and relevant interfaces, according to an example embodiment. It is to be noted that the components are shown schematically in greatly simplified form, with only those components relevant to understanding of the embodiments being illustrated.

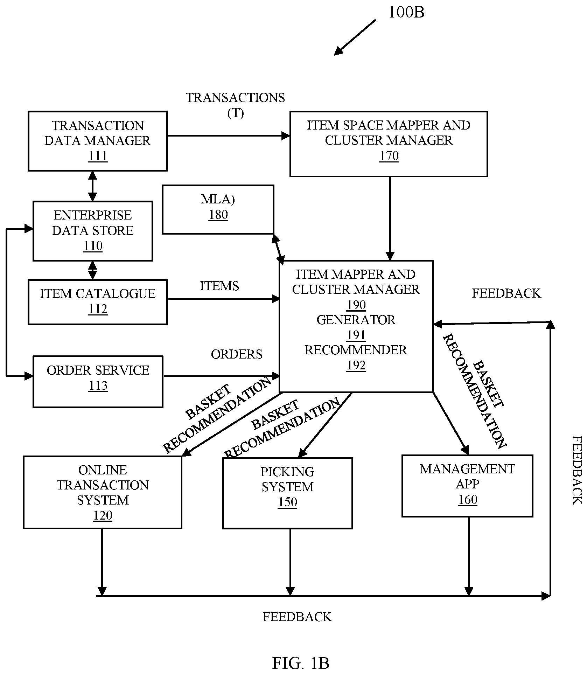

Furthermore, the various components (that are identified in the FIGS. 1A and 1B) are illustrated and the arrangement of the components is presented for purposes of illustration only. It is to be noted that other arrangements with more or less components are possible without departing from the teachings of data-driven prepackaged basket generation and relevant interfaces presented herein and below.

The system 100A provides a mechanism by which item codes for items of a product catalogue are mapped to multidimensional space as item vectors representing contexts between each item within multidimensional space. Clusters of the item codes (item clusters) are derived based on distances between the item code pairs as mapped within the multidimensional space, and each item cluster comprising a predefined total number of item codes. Similar item clusters are filtered based on transaction data associated with the corresponding item codes and item types associated with the item codes. Clusters of baskets (basket clusters) are derived from the filtered item clusters, each basket cluster comprising a predefined number of item clusters. Each basket cluster is scored based on transaction frequencies of item codes assigned to that basket cluster. A predefined number of basket clusters are selected based on scores associated with the basket clusters. Prepackaged baskets are generated by selecting a single item code from each of the selected basket clusters, such that each prepackaged basket comprises an item code from each of the selected basket clusters. Each prepackaged basket is provided as a recommendation to a variety of systems/services via an interface. Each prepackaged basket represented as a set of specific item codes that comprise that prepackaged basket.

To address the challenges presented during the pandemic, some retailers are proposing to their customers that the customers by prepackaged baskets that normally include commonly purchased products of the retailers. For example, a prepackaged basket may include bread, cheese, ham, eggs, and rice. If widely purchased prepackaged baskets can substantially reduce touching surfaces within a store, boost order delivery times, and shorten in-store visit time, which is desirable during the pandemic. Shoppers also benefit, as retailers are able to offer discounts and/or faster delivery (order fulfillment). But these current retailers fail to implement prepackaged baskets in an effective way. Determining items for a prepackaged basket is not as simple as prepackaging top selling items together in one basket. The challenge is to provide multiple combinations of items that would be appealing to as many customers as possible. For example, if a retailer wants to provide a prepackaged basket of bread, cheese, eggs, and ham, the retailer would need to determine which brands of brad sell best with which brands of cheese and ham, and the retailer would need to provide multiple alternatives to baskets of this category. Multi-brands also make it hard to identify those on baskets that are worth prepackaging. It may be intuitive that millions of baskets may contain pasta, tomato sauce, and cheese. But, with so many brands of different pastas, different cheeses, and different tomato sauces, this typical basket will appear in hundreds of different formats where the items vary across multiple brands. Each format may only have thousands of purchase occurrences. The unsophisticated approach currently being taking in the industry with respect to this scenario does not identify the potential of producing such prepackaged baskets.

As will be illustrated more completely herein and below, these issues are solved by system 100A, process flow 100B, method 200, and method 300. Furthermore, the teachings herein conforms with the modernization and digital transformation trends being experienced by the retail industry during the world-wide COVID19 pandemic. The techniques presented for generation of prepackaged baskets and prepackaged basket recommendations is both automatic, data-driven (meaning based on real observations from past record transactions and not based on presumptions), and adaptable, which accurately represents the affinity between items and between combinations of items.

System 100A comprises an enterprise data store 110, an online transaction system 120, in-store transaction terminals 130, user devices 140, a picking or order fulfillment system 150, a management application (app) 160, an item space mapper and item cluster manager 170, one or more machine-learning algorithms (MLA) 180, basket cluster manager 190, a prepackaged basket generator 191, and a prepackaged basket recommender 192. System 100A comprises a variety of computing devices, each of which comprises at least one processor and a non-transitory computer-readable storage medium comprising executable instructions. The executable instructions when executed by the corresponding processor from the corresponding non-transitory computer-readable storage medium causes that processor to perform operations discussed herein and below with respect to the components 110-192.

An "item code" represents an item from a given retailer's product catalogue. Each item code's affinity/similarity to the other item codes defines that item's vector in multidimensional space. The affinity/similarity and item code vector determined by Word2Vec algorithms based on analysis of the retailer's transaction histories and product catalogue. An "item vector" is a mathematical expression showing points within the multidimensional space representing the contexts of a given item.

A "basket" is a combination of collection of items represented by a set of item codes. The basket may be assigned a unique basket identifier, which is linked to the corresponding set of item codes.

Enterprise data store 110 includes a variety of enterprise data, such as transaction histories for transactions performed with a retailer. Other types of data may be included in enterprise data store 100 as well, such as incentives available to consumers, customer data for known customers (loyalty data, profile data, *etc.*)*,* the transaction details for transactions of customers (including item codes for items), item or product catalogue data, and other information captured and retained by the enterprise for the store and other stores associated with the enterprise (retailer).

Online transaction system 120 comprises interfaces and corresponding software by which customers perform online transactions with a retailer, such as via browsing items, storing selected items in a virtual cart, and checking out (paying for) items in the virtual cart. The online transaction system 120 can be web-based and/or mobile app-based. Virtual cart data provided in real time from online transaction system 120 to enterprise data store 110 or provided via an Application Programming Interface (API) in real time to prepackaged basket recommender 192 during an online shopping session to provide item codes in a customer's cart. Prepackaged basket recommender 192 can compare the cart item codes against known prepackaged baskets (and there set of item codes) and determine when the deviation between cart item codes is within a threshold value of a prepackaged basket. When this occurs, the API is used for the online transaction system 120 to suggest a specific prepacked basket of items in place of all or some set of items in the cart (an incentive or discount may also be communicated to the shopper/customer should the customer accept the prepackaged basket).

Transaction terminals 130 comprise peripheral devices (scanners, printers, media acceptors/dispensers, weigh scales, Personal Identification Number (PIN) pads, card readers, etc.) and corresponding software for performing customer checkouts associated with transactions. Real-time item and transaction data provided by terminals to enterprise data store 110.

User devices 140 comprise peripherals (touchscreens, cameras, etc.) and corresponding software for performing customer transactions using a web browser or a mobile application (app). Real time transaction data provided by any app to enterprise data store 110.

Picking system 150 comprises devices and corresponding software and user interfaces for performing order fulfillment of orders within the store. An API between picking system 150 and prepackaged basket generator may provide specific item codes for a given prepackaged basket identifier back to a picker during picking of the prepackaged baskets.

Item space mapper and item cluster manager 170 initially generates vectors for item codes in a product catalogue (obtained from enterprise data store 110) using transaction histories (again, obtained from enterprise data store 110). In this manner, the item codes in the product catalogue are assigned vectors that map to multidimensional space. Each vector linked to the item codes of the product catalogue. "Item embedding" is applied using a "Word2Vec" algorithm. Word2Vec is a group of algorithms used primarily in the field of Natural Language Processing (NLP) for machine translation. The Word2Vec takes as its input a large corpus of text (product catalogue of item codes and transaction histories from enterprise data store 110) and produces a vector space of typically several hundred dimensions (multidimensional space), each unique word (item code) in the corpus being assigned a corresponding unique vector plotted in the multidimensional space. In this way, item codes that share common contexts/affinities within the transaction histories are plotted in close proximity to one another within the multidimensional space. The transactions of the transaction histories are provided as sentences to the Word2Vec algorithm and the words are the item codes (all words available are identified from the product catalogue). Mathematical calculations can be applied on the vectoral numeric representations (vectors) for the item codes.

Once the product catalogue and transaction histories are processed to create the item code vectors for the items, item space mapper and item cluster manager 170 can cluster item codes from the multidimensional space into item clusters (groupings of item codes). The size of each item cluster is a configurable number (for example - 5 to 6 item codes per item cluster). Each cluster determined based on distances between the item vectors plotted within the multidimensional space (the distances represent affinities between the item codes and can be a preset distance that each item in the cluster cannot exceed when compared to another item in the cluster (e.g., the greatest distance between any pair of items is under a threshold distance).

Next, item space mapper and item cluster manager 170 determines "top sellers" for each of the item codes within the item clusters. A "top selling cluster" is identified by 1) a sum of all sales for the item codes that are in the item cluster under evaluation; and 2) the sum of all distances between pairs of item vectors within the cluster under evaluation (which must be under a predefined distance). This reduces the number of item clusters down to top selling item clusters. After this is done, the item clusters will include multiple brands of a same or similar item type (item category).

Next, item space mapper and item cluster manager 170 filters the top selling item clusters. If the item top selling item clusters include pairs of item codes which are very close to one another, only the top selling combinations of items. This is done to avoid creating very similar item clusters. This may be done by comparing sales performance of the item cluster pairs against one another and maintaining on a configured percentage of the top selling clusters. For example, if one item cluster comprises {bread brand 1 ... bread brand 5} and another item cluster comprises {bread brand 6 ... bread brand 10}, item space mapper and item cluster manager 170 only retains the item cluster that performed (based on sales from transaction histories) the best between that pair of item clusters.

Once the item clusters are produced by item space mapper and item cluster manager 170, the item clusters, item vectors, and item codes are processed by the basket cluster manager 190. Basket cluster manager 190 generates clusters of baskets (basket clusters) that comprise item clusters. Moreover, each basket cluster is set to include only a small number of corresponding item clusters, such as 6. Basket cluster manager 190 randomly generates the basket clusters from the item clusters. Each basket cluster is then scored. Past transactions from the transaction history are evaluated to generate each basket cluster score, a frequency counter is maintained that is incremented by 1 each time a transaction is found where at least one item code from each item cluster of the basket cluster under evaluation was detected. So, the frequency counter is only incremented for a given basket cluster when a single transaction included an item code for an item that is defined in each of the item clusters that comprise the given basket cluster (the transaction had an item from every item cluster of that basket cluster).

Next, prepackaged basket generator 191 selects a preconfigured number of the basket clusters based on the basket cluster scores. It is noted that the item mapper and item cluster manager 170 may also provide the basket clusters in a sorted order (highest to lowest), such that prepackaged basket generator grabs the first N (configured number) basket clusters for continued processing from the sorted list of scored basket clusters.

The prepackaged basket generator 191 processes each remaining basket cluster to select a single item code from each item cluster of that basket cluster to generate a prepackaged basket. The total number of generated prepackaged baskets is set to a predefined small number (configurable number) for each basket cluster. Moreover, any selected item code that is put in an already generated prepackaged basket is ineligible to be selected a second time by prepackaged basket generator 191 with subsequently generated prepackaged baskets.

The prepackaged baskets that were generated are provided by prepackaged basket generator 191 to prepackaged basket recommender 192 as a list (can be sorted by revenue - highest-to-lowest revenue sorted). Prepackaged basket recommender 192 uses an API to provided interfaces to online transaction system 120, transaction terminals 130, user devices 140, picking system 150, and management application 160. For example, the list of prepackaged baskets (each basket comprising a specific set of item codes) can be provided to management application 160 for purposes of a store manager to cause the prepackaged baskets to be assembled (packaged) and situated in the store with appropriate labeling allowing customers to grab a prepackaged basket, pay, and leave the store minimizing customer touching and length of time within the store. As another example, prepackaged basket recommender 192 uses an API to interact with online transaction system 120, such that the prepackaged baskets are available for selection as a single item during online shopping by a customer of online transaction system 120.

In another case, online transaction system 120 provides in real time through the API a current listing of items for a cart of the customer during a transaction, prepackaged basket recommender 190 may use the item vectors for the cart items to compare against item vectors of the available prepackaged baskets to determine that instead of some cart items a prepackaged basket is available. Prepackaged basket recommender 192 communicates the matching prepackaged basket to online transaction system 120. Online transaction system 120 through a user-facing interface offers the customer the prepackaged basket as an alternative to some or all of the items that comprise the customer's cart. A discount or incentive may also be provided should the customer accept the prepackaged basket alternative, such as a discount in price, item pickup or delivery improved (prepackaged basket may be immediately available for pickup or delivery whereas the customer may have had to wait days or weeks for the cart items).

In another instance, prepackaged basket recommender may use an API to communicate specific item codes for specific prepackaged baskets to picking system 150, allowing pickers to assemble the prepackaged baskets. In this way, the prepackaged baskets may be viewed as orders that are picked for pickup, delivery, or in store placement.

Prepackaged basket recommender 192 also monitors transaction data produced by components 120-130 to identify when prepackaged baskets were actually purchased. The sales data for the baskets can be used as feedback to eliminate some existing prepackaged baskets or expand other prepackaged baskets.

In an embodiment, machine learning algorithms (MLA) 180 may be deployed to learn the prepackaged basket generation based on purchase records and to automatically generate proposed prepackaged baskets.

FIG 1B illustrates a more fine-grain view of some components associated with system 100A.

Transaction data manager 111 provides transaction data from enterprise data store to item space mapper and item cluster manager 170. Item space mapper and item cluster manager 170 generates the multidimensional vector space and unique vectors plotted within that space for each item code of the item catalogue 112. Manager 170 also generates item clusters as discussed above. Basket cluster manager 190 processes the item clusters to generate basket clusters and prepackaged basket generator 191 generates prepackaged baskets. Prepackaged basket recommender 192 receives requests for prepackaged baskets or transaction data from order service 113 and provides prepackaged basket recommendations. Feedback is collected from system 120, system 150, and app 160; the feedback, prepackaged baskets, and transaction data (order data) can be used to train MLAs 180 for purposes of refining prepackaged basket generation, learning based on observations, and optimizing basket generation.

In an embodiment, components 110-113 and 170-192 are provided as a single cloud-based surface to components 120, 150, and 160 via an API.

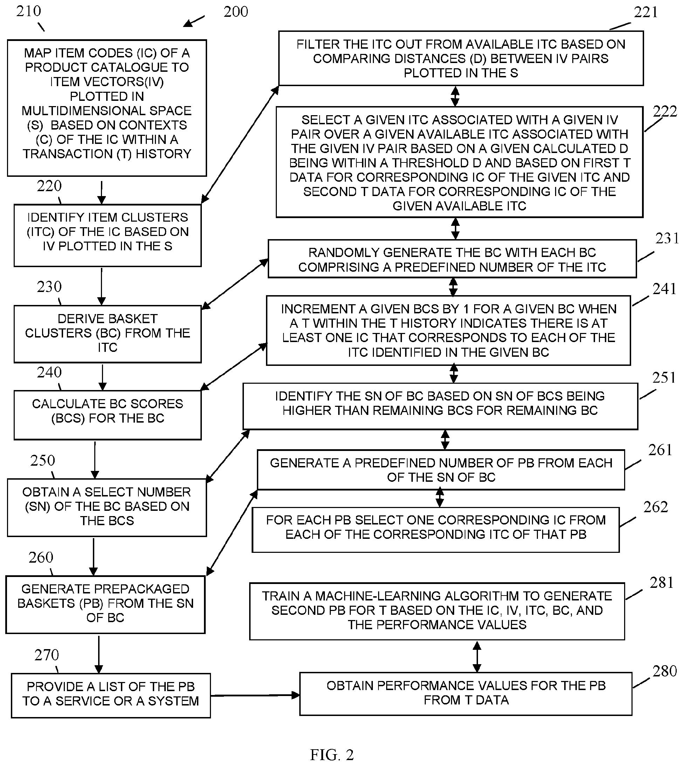

These and other embodiments are now discussed with reference to the FIGS. 2-3.

FIG. 2 is a diagram of a method 200 for data-driven prepackaged basket generation and relevant interfaces, according to an example embodiment. The software module(s) that implements the method 200 is referred to as a "prepackaged basket generator." The prepackaged basket generator is implemented as executable instructions programmed and residing within memory and/or a non-transitory computer-readable (processor-readable) storage medium and executed by one or more processors of a device. The processor(s) of the device that executes the prepackaged basket generator are specifically configured and programmed to process the prepackaged basket generator. The prepackaged basket generator has access to one or more network connections during its processing. The network connections can be wired, wireless, or a combination of wired and wireless.

In an embodiment, the device that executes the prepackaged basket generator is a server. In an embodiment, the server is a cloud processing environment that comprises multiple servers cooperating with one another as a single server. In an embodiment, the server is a Local Area Network (LAN) server.

In an embodiment, the device that executes the prepackaged basket generator is a network-edge device that is local or on an edge of a LAN of a retail store.

In an embodiment, the prepackaged basket generator is all of or some combination of 170-192.

In an embodiment, the prepackaged basket generator performs the processing discussed above with system 100A and process flow 100B.

In an embodiment, the prepackaged basket generator is provided as a SaaS to a plurality of enterprises, each enterprise having a subscription relevant to its customers and enterprise data store 110.

At 210, the prepackaged basket generator maps item codes of a product catalogue to item vectors in multidimensional space based on contexts of the item codes within a transaction history.

At 220, the prepackaged basket generator identifies item clusters of the item codes based on the item vectors plotted in the multidimensional space.

In an embodiment, at 221, the prepackaged basket generator filters the item clusters from available item clusters based on comparing distances between item vector pairs plotted in the multidimensional space.

In an embodiment of 221 and at 222, the prepackaged basket generator selects a given item cluster associated with a given item vector pair over a given available item cluster associated with the given item vector based on a given calculated distance being within a threshold distance and based on first transaction data for corresponding item codes of the given item cluster and second transaction data for corresponding item codes of the given available item cluster.

At 230, the prepackaged basket generator derives basket clusters from the item clusters.

In an embodiment of 222 and 230, at 231, the prepackaged basket generator randomly generates the basket clusters with each basket cluster comprising a predefined number of the item clusters.

At 240, the prepackaged basket generator calculates basket cluster scores for the basket clusters.

In an embodiment of 231 and 240, at 241, the prepackaged basket generator increments a given basket cluster score by 1 for a given basket cluster when a transaction within the transaction history indicates there is at least one item code that corresponds to each of the item clusters identified in the given basket cluster.

At 250, the prepackaged basket generator obtains a select number of the basket clusters based on the basket cluster scores.

In an embodiment of 241 and 250, at 251, the prepackaged basket generator identifies the select number of basket clusters based on the select number of basket scores being higher than remaining basket cluster scores for remaining basket clusters.

At 260, the prepackaged basket generator generates prepackaged baskets from the select number of basket clusters.

In an embodiment of 251 and 260, at 261, the prepackaged basket generator generates a predefined number of prepackaged baskets form each of the select number of basket clusters.

In an embodiment of 261 and at 262, the prepackaged basket generator for each prepackaged basket selects one corresponding item code from each of the corresponding item clusters of that prepackaged basket.

At 270, the prepackaged basket generator provides a list of the prepackaged baskets to a service or a system (such as 120-160).

In an embodiment, at 280, the prepackaged basket generator obtains performance values for the prepackaged baskets from transaction data (such as inventor and sales associated with the prepackaged baskets).

In an embodiment of 280 and at 281, the prepackaged basket generator trains an MLA 180 to generate second or subsequent prepacked baskets based on the item codes, the item vectors, the item clusters, the basket clusters, and the performance values.

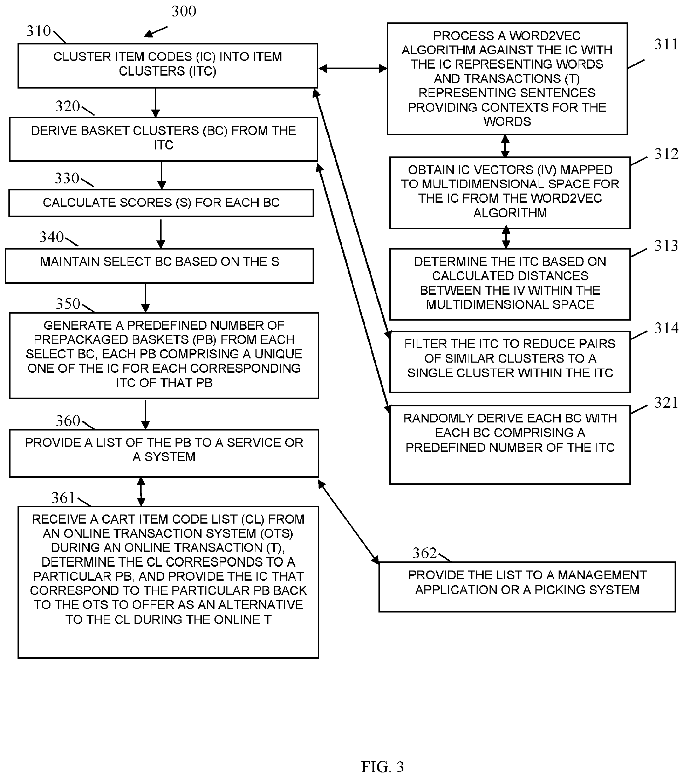

FIG. 3 is a diagram of another method 300 for data-driven prepackaged basket generation and relevant interfaces, according to an example embodiment. The software module(s) that implements the method 300 is referred to as a "prepackaged basket manager." The prepackaged basket manager is implemented as executable instructions programmed and residing within memory and/or a non-transitory computer-readable (processor-readable) storage medium and executed by one or more processors of a device. The processors that execute the prepackaged basket manager are specifically configured and programmed to process the prepackaged basket manager. The prepackaged basket manager has access to one or more network connections during its processing. The network connections can be wired, wireless, or a combination of wired and wireless.

In an embodiment, the device that executes the prepackaged basket manager is a server. In an embodiment, the server is a cloud processing environment that comprises multiple servers cooperating with one another as a single server. In an embodiment, the server is a LAN server that is local to a retail store.

In an embodiment, the device that executes the prepackaged basket manager is a network-edge device that is on the edge of a LAN for a retail store.

In an embodiment, the prepackaged basket manager is all or some combination of 170-192, process flow 1 OOB, and/or the method 200.

The prepackaged basket manager presents another and, in some ways, enhanced processing perspective to that which was described above with the FIG. 2.

At 310, the prepackaged basket manager clusters item codes into item vectors.

In an embodiment, at 311, the prepackaged basket manager processes a Word2Vec algorithm against the item codes with the item codes representing words and transactions representing sentences providing contexts for the words.

In an embodiment of 311 and at 312, the prepackaged basket manager obtains item vectors mapped to multidimensional space for the item codes from the Word2Vec algorithm.

In an embodiment of 312 and at 313, the prepackaged basket manager determines the item clusters based on calculated distances between the item vectors within the multidimensional space.

In an embodiment, at 314, the prepackaged basket manager filters the item clusters to reduce pairs of similar clusters to a single cluster within the item clusters.

At 320, the prepackaged basket manager derives basket clusters from the item clusters.

In an embodiment, at 321, the prepackaged basket manager randomly derives each basket cluster with each basket cluster comprising a predefined number of the item clusters.

At 330, the prepackaged basket manager calculates scores for each basket cluster.

At 340, the prepackaged basket manager maintains select basket clusters based on the scores.

At 350, the prepackaged basket manager generates a predefined number of prepackaged baskets from each select basket cluster, each prepackaged basket comprising a unique one of the item codes for each corresponding item cluster of that prepackaged basket.

At 360, the prepackaged basket manager provides a list of the prepackaged baskets to a service or a system.

In an embodiment, at 361, the prepackaged basket manager receives a cart item code list from an online transaction system 120 during an online transaction. The prepackaged basket manager determines the cart item code list corresponds to a particular prepackaged basket and the prepackaged basket manager provides the particular prepackaged basket back to the online transaction system 120 to offer as an alternative to the cart item code list during the online transaction.

In an embodiment, at 362, the prepackaged basket manager provides the list to a management application 160 or a picking system 150.

It should be appreciated that where software is described in a particular form (such as a component or module) this is merely to aid understanding and is not intended to limit how software that implements those functions may be architected or structured. For example, modules are illustrated as separate modules, but may be implemented as homogenous code, as individual components, some, but not all of these modules may be combined, or the functions may be implemented in software structured in any other convenient manner.

Furthermore, although the software modules are illustrated as executing on one piece of hardware, the software may be distributed over multiple processors or in any other convenient manner.

The above description is illustrative, and not restrictive. Many other embodiments will be apparent to those of skill in the art upon reviewing the above description. The scope of embodiments should therefore be determined with reference to the appended claims, along with the full scope of equivalents to which such claims are entitled.

In the foregoing description of the embodiments, various features are grouped together in a single embodiment for the purpose of streamlining the disclosure. This method of disclosure is not to be interpreted as reflecting that the claimed embodiments have more features than are expressly recited in each claim. Rather, as the following claims reflect, inventive subject matter lies in less than all features of a single disclosed embodiment. Thus, the following claims are hereby incorporated into the Description of the Embodiments, with each claim standing on its own as a separate exemplary embodiment.

## Claims

1. A method, comprising:
mapping item codes of a product catalogue to item vectors plotted in multidimensional space based on contexts of the item codes within a transaction history;
identifying item clusters of the item codes based on the item vectors plotted in the multidimensional space;
deriving basket clusters from the item clusters;
calculating basket cluster scores for the basket clusters;
obtaining a select number of the basket clusters based on the basket cluster scores;
generating prepackaged baskets from the select number of the basket clusters; and
providing a list of the prepackaged baskets to a service or a system.

2. The method of claim 1 further comprising, obtaining performance values for the prepackaged baskets from transaction data.

3. The method of claim 2 further comprising training a machine-learning algorithm to generate second prepackaged baskets for transactions based on the item codes, item vectors, the item clusters, the basket clusters, and the performance values.

4. The method of claim 1, wherein identifying further includes filtering the item clusters out from available item clusters based on comparing calculated distances between item vector pairs plotted in the multidimensional space.

5. The method of claim 1, wherein filtering further includes selecting a given item cluster associated with a given item vector pair over a given available item cluster associated with the given item vector pair based on a given calculated distance being within a threshold distance and based on first transaction data for corresponding item codes of the given item cluster and second transaction data for corresponding item codes of the given available item cluster.

6. The method of claim 5, wherein deriving further includes randomly generating the basket clusters with each basket cluster comprising a predefined number of the item clusters.

7. The method of claim 6, wherein calculating further includes incrementing a given basket cluster score by 1 for a given basket cluster when a transaction within the transaction history indicates there is at least one item code that corresponds to each of the corresponding item clusters identified in the given basket cluster.

8. The method of claim 7, wherein obtaining further includes identifying the select number of basket clusters based on the select number of basket cluster scores being higher than remaining basket cluster scores for remaining basket clusters.

9. The method of claim 8, wherein generating further includes generating a predefined number of prepackaged baskets from each of the select number of basket clusters.

10. The method of claim 9, wherein generating further includes for each prepackaged basket select one corresponding item code from each of the corresponding item clusters of that prepackaged basket.

11. A system, comprising:
at least one processing device having at least one processor configured to execute instructions from a non-transitory computer-readable storage medium;
the instructions when executed by the at least one processor from the non-transitory computer-readable storage medium cause the at least processor to perform operations comprising:
clustering item codes to item clusters;
randomly deriving basket clusters from the item clusters;
scoring the basket clusters;
selecting a predefined number of top scores for the basket clusters based on the scoring;
generating a preconfigured number of prepackaged baskets for each of the predefined number of basket clusters; and
providing a list of the prepackaged baskets to a service or a system through an Application Programming Interface (API).

12. The system of claim 11, wherein the at least one processor performs the operations as a cloud service provided in real time over network connections to online transaction systems associated with online transactions, picking systems associated with the order fulfillments, and management applications associated with store management.
